Europäisches Patentamt

European Patent Office

Office européen des brevets

(19)

(11) Numéro de publication: **0 207 855**
**B1**

(12) **FASCICULE DE BREVET EUROPEEN**

(45) Date de publication du fascicule du brevet:
**24.08.88**

(51) Int. Cl.⁴: **B 60 G 17/04,** F 16 F 9/34

(21) Numéro de dépôt: **86401416.2**

(22) Date de dépôt: **26.06.86**

(54) **Dispositif amortisseur et correcteur de hauteur de véhicule utilisant ce dispositif.**

(30) Priorité: **03.07.85 FR 8510187**

(43) Date de publication de la demande:
**07.01.87 Bulletin 87/2**

(45) Mention de la délivrance du brevet:
**24.08.88 Bulletin 88/34**

(84) Etats contractants désignés:
**DE GB IT**

(56) Documents cités:
**DE - B - 1 210 339**
**DE - B - 1 298 806**
**FR - A - 1 210 681**
**FR - A - 1 505 983**
**GB - A - 728 495**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Buvat, Irénée, 57 rue Clisson, F-75013 Paris (FR)**

(74) Mandataire: **Durand, Yves Armand Louis et al, Cabinet Z. Weinstein 20, Avenue de Friedland, F-75008 Paris (FR)**

## Description

La présente invention a essentiellement pour objet un dispositif amortisseur pouvant être monté par exemple sur le correcteur de hauteur d'un véhicule automobile à suspension hydropneumatique.

On sait que les véhicules à suspension hydropneumatique comportent sur chaque essieu un correcteur de hauteur permettant de rétablir l'assiette du véhicule selon la charge. Un tel correcteur de hauteur se compose généralement d'une vanne hydraulique, de préférence à tiroir, apte à relier, selon la charge du véhicule, les vérins de suspension, soit à une source de pression soit à un réservoir. Des moyens sensibles à la hauteur de l'essieu sont généralement prévus pour commander le tiroir de la vanne.

Afin d'éviter l'intervention intempestive du correcteur de hauteur pendant le débattement de la suspension, on prévoit généralement des moyens de temporisation pour que le correcteur de hauteur n'intervienne que pour une variante d'assiette de longue durée. Ces moyens de temporisation sont généralement agencés de telle sorte que le déplacement du tiroir du correcteur de hauteur soit accompagné d'un écoulement de fluide hydraulique à travers un dispositif amortisseur.

Plus précisément, le correcteur de hauteur comporte deux chambres à paroi mobile ou déformable, coopérant avec le tiroir du correcteur, de telle sorte que le déplacement du tiroir, dans un sens ou dans l'autre, soit accompagné de variations de volumes dans les deux chambres qui sont reliées l'une et l'autre à un réservoir de fluide hydraulique par l'intermédiaire d'un circuit sur lequel est monté le dispositif amortisseur en question, lequel permet bien sûr la libre communication du fluide dans les deux sens entre le réservoir et les deux chambres. Autrement dit, l'une des deux chambres peut aspirer du liquide pendant que l'autre en refoule, étant entendu que les volumes aspirés et refoulés ne sont pas nécessairement égaux.

L'invention a pour but de proposer un nouveau type de dispositif amortisseur fiable et simplifié pouvant être monté par exemple sur le correcteur de hauteur d'un véhicule à suspension hydropneumatique.

D'une manière générale, cet amortisseur est du type agencé sur un circuit hydraulique reliant deux chambres expansibles à un réservoir de fluide hydraulique et est essentiellement caractérisé par les caractéristiques de la seconde partie de la revendication 1.

Suivant une réalisation préférée, les deux surfaces rainurées appartiennent à deux éléments cylindriques tronqués obliquement et définissant ainsi un plan oblique de jonction dans lequel est située la paroi mince précitée.

Suivant une autre caractéristique de l'invention, les surfaces elliptiques des deux éléments cylindriques comportent chacune un agencement de rainures débouchant dans le plan de jonction, lequel agencement est identique sur ces deux éléments et se déduit par une rotation de 180° d'un élément par rapport à l'autre.

Le dispositif amortisseur de l'invention est encore caractérisé par le fait que l'étanchéité entre les surfaces rainurées et la paroi mince interposée entre elles est assurée par rodage et placage.

Selon encore une autre caractéristique, les rainures des deux éléments et les orifices de la paroi mince définissent ensemble deux circuits hydrauliques se raccordant à une même gorge annulaire située sensiblement au milieu du plan de jonction oblique précité et reliée au réservoir.

On précisera encore ici que les éléments cylindriques précités comportent chacun un pion et une encoche complémentaires coopérant avec des encoches de la paroi mince pour assurer le centrage de l'ensemble.

L'invention vise également un correcteur de hauteur de véhicule à suspension hydropneumatique et du type comprenant une vanne, de préférence à tiroir, coopérant avec la paroi mobile ou déformable de deux chambres reliées l'une et l'autre à un réservoir de fluide hydraulique par une circuit sur lequel est monté au moins un dispositif amortisseur répondant aux caractéristiques susmentionnées.

Mais d'autres caractéristiques et avantages de l'invention apparaîtront mieux dans la description détaillée qui suit et se réfère aux dessins annexés, donnés uniquement à titre d'exemple, et dans lesquels;

La fig. 1 est une vue en coupe d'un correcteur de hauteur d'un type connu.

La fig. 2 est une vue en coupe suivant la ligne II–II de la figure 1.

La fig. 3 est une vue agrandie de la partie fléchée III sur la figure 2.

La fig. 4 est une vue en coupe longitudinale du dispositif amortisseur de l'invention, la coupe passant par les deux orifices d'entrée et sortie de fluide hydraulique, et étant matérialisée par la ligne IV–IV sur les figures 5, 6 et 7.

La fig. 5 est une vue de dessus, suivant la flèche V de la figure 4 de la moitié supérieure de l'amortisseur.

La fig. 6 est une vue de dessus, suivant la flèche VI de la figure 4, de la moitié inférieure de l'amortisseur, cette moitié inférieure étant séparée de la moitié supérieure visible sur la figure 5; et

La fig. 7 est une vue en bout, suivant la flèche VII de la figure 4, de l'armortisseur dont la moitié supérieure est enlevée.

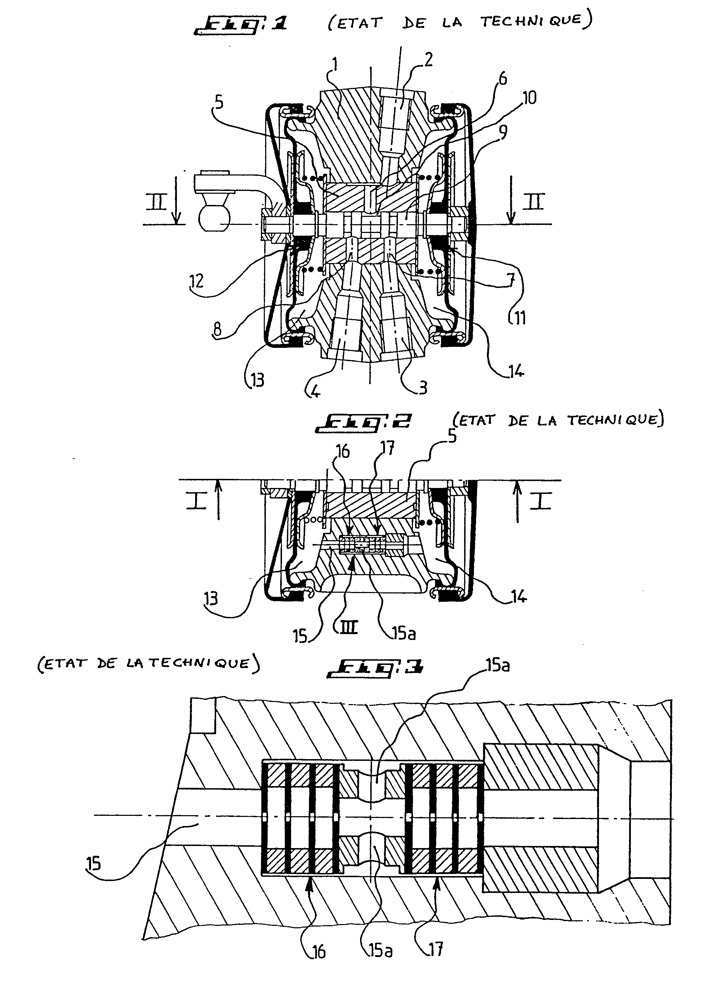

On décrira tout d'abord un correcteur de hauteur de type connu en se reportant aux figures 1 à 3.

Ce correcteur comprend un corps 1 comportant un conduit 2 raccordé à des vérins de suspension non représentés. Le corps 1 comprend encore un conduit d'admission 3 raccordé à une source de pression, et un conduit de retour 4 raccordé à un réservoir de fluide hydraulique, tel que par exemple d'huile.

Dans le corps 1, est emmanchée à force une chemise 5 munie de conduits 6, 7 et 8 prolongeant et communiquant respectivement avec les conduits 2, 3 et 4. Dans la chemise 5 est monté coulissant un tiroir 9 muni d'une gorge 10, de sorte que, selon la position du tiroir, le conduit 2 peut être relié soit à la source de pression par l'intermédiaire du conduit d'admission 3, soit au réservoir par l'intermédiaire du conduit de retour 4.

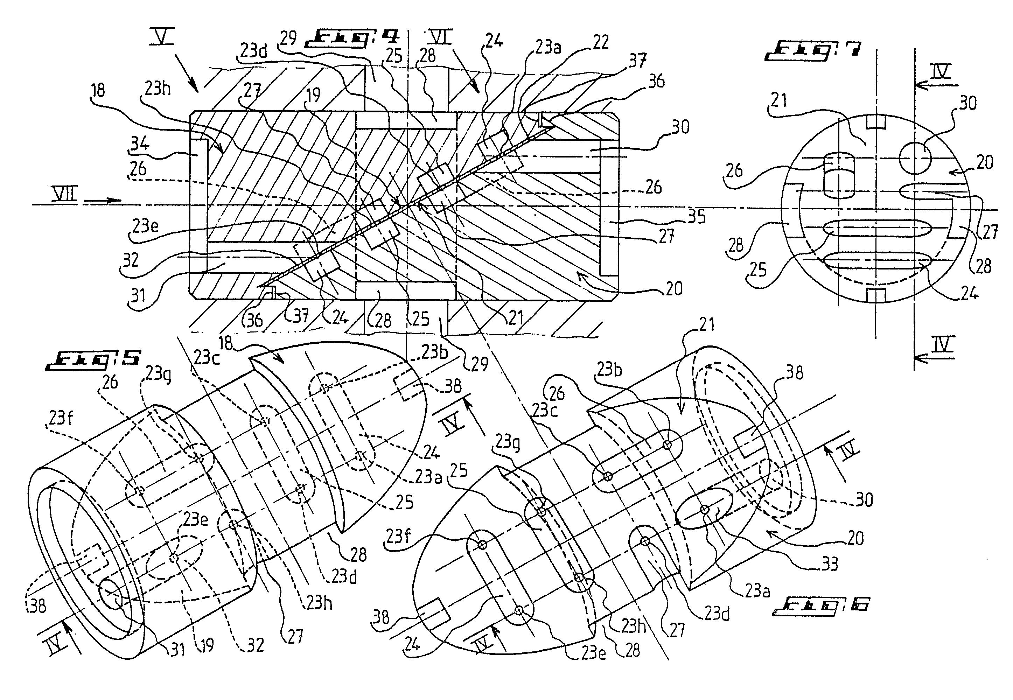

Le tiroir 9 est attelé à deux membranes flexibles ou mobiles 11 et 12 et peut déformer ces deux membranes qui appartiennent à deux chambres 13 et 14 qui sont remplies d'huile. Comme on le voit sur la figure 2, un perçage 15 relie les deux chambres 13 et 14 et est relié au réservoir par un conduit non représenté et raccordé au centre 15a du perçage 15.

Ce perçage est muni d'un dispositif amortisseur constitué ici par deux ensembles de rondelles 16 et 17 qui sont bien visibles sur la figure 3 et qui sont disposés de part et d'autre du centre 15a du perçage 15 relié au réservoir d'huile. Ainsi, chacune des chambres 13 et 14 est reliée au réservoir par l'intermédiaire d'un amortisseur 16 ou 17.

La présente invention est précisément axée sur la réalisation particulière d'un dispositif amortisseur que l'on décrira maintenant en détail en se reportant aux figures 4 à 7.

Suivant la réalisation représentée sur ces figures, un dispositif amortisseur conforme à l'invention comprend un corps cylindrique constitué de deux éléments cylindriques identiques 18 et 20 qui sont tronqués obliquement, comme on l'a montré en 19 et 21.

Les deux troncatures obliques 19 et 21 définissent deux surfaces elliptiques qui sont appliquées l'une contre l'autre avec interposition d'une paroi mince 22 percée d'orifices ou trous calibrés 23a à 23h.

Les deux surfaces elliptiques 19 et 21, de même que la paroi mince 22, sont avantageusement rodées de manière à assurer l'étanchéité par simple placage des deux éléments 18 et 20 sur ladite paroi mince située dans le plan oblique de jonction de ces deux éléments.

Chaque élément tronqué 18, 20 est muni sur sa surface elliptique 19, 21 de quatre rainures 24, 25, 26 et 27. L'agencement des rainures 24 à 27 débouchant dans le plan de jonction des deux éléments tronqués 18 et 20 est identique et se déduit par une rotation de 180° d'un élément par rapport à l'autre, comme on le comprend en se reportant plus particulièrement aux figures 5 et 6.

Les rainures 27 appartenant respectivement aux éléments 18 et 20 débouchent dans une gorge annulaire 28 pratiquée dans l'ensemble cylindrique constitué par la juxtaposition des éléments 18, 20 et 22. Cette gorge 28 est reliée au réservoir d'huile par des conduits 29.

Chaque élément ou moitié 18, 20 comporte un perçage 30, 31 qui est parallèle à l'axe de l'élément et qui débouche dans les sections ou surfaces elliptiques 19 ou 21 selon un trou elliptique repéré en 32 et 33 sur notamment les figures 5 et 6.

Au centre de ces trous, correspondent les orifices 23a et 23e ménagés dans la paroi mince 22.

Lorsque le dispositif amortisseur selon l'invention est monté sur un correcteur de hauteur, tel que celui visible sur les figures 1 à 3, les perçages 30 et 31 sont reliés au perçage 15 par l'intermédiaire des chambres à huile 34 et 35.

Chacun des éléments cylindriques tronqués 18 et 20 comporte un pion 36 et une encoche ou entaille 37, de telle sorte que le pion 36 de l'élément 18 s'engage dans l'entaille 37 de l'élément 20 et réciproquement. Les pions 36 et les encoches 37 coopèrent avec des entailles de la paroi mince 22, ces entailles étant repérées en 38 sur les figures 5 et 6. De cette manière, on comprend que le centrage, et l'étanchéité de l'ensemble constitué par les éléments 18, 20 et 22, sont assurés.

On décrira maintenant le fonctionnement du dispositif amortisseur qui vient d'être décrit, c'est-à-dire la circulation du fluide hydraulique dans ce dispositif.

L'huile venant du passage 30 de la moitié inférieure 20 du dispositif jusqu'à l'ouverture elliptique 33 passe par une perçage 23a de la paroi mince 22. L'huile passe ensuite dans la rainure 24 de la moitié supérieure 18, dans un deuxième trou 23b de la paroi mince 22, dans la rainure 26 de la moitié inférieure 20, dans un troisième trou 23c de la paroi mince 22, dans la rainure 25 de la moitié supérieure 18, dans un quatrième trou 23d de la paroi mince 22, et enfin dans la rainure 27 de la moitié inférieure 20, ladite rainure débouchant dans la gorge 28 reliée au réservoir.

De la même manière, l'huile venant du conduit 31 de l'élément supérieur 18 aboutit à l'ouverture elliptique 32, passe par un trou 23e de la paroi 22, puis elle passe successivement par la rainure 24 de la moitié ou élément inférieur 20, un trou 23f de la paroi 22, la rainure 26 de l'élément supérieur 18, un autre trou ou perçage calibré 23g de la paroi 22, la rainure 25 de l'élément inférieur 20, un autre trou 23h de la paroi 22, la rainure 27 de l'élément supérieur 18 et, à ce stade, l'huile passe dans la gorge 28 raccordé au réservoir.

On a donc réalisé suivant l'invention un dispositif amortisseur se composant tout simplement de trois éléments plaqués l'un contre l'autre et définissant deux passages tortueux permettant, tout en freinant son écoulement, la libre communication de l'huile dans les deux sens entre deux chambres et un réservoir.

Bien entendu, l'invention n'est nullement limitée au mode de réalisation décrit et illustré qui n'a été donné qu'à titre d'exemple.

C'est ainsi que l'orientation des rainures débouchant sur la surface elliptique de chaque élément cylindrique tronqué 18, 20 pourrait être quelconque sans sortir du cadre de l'invention.

C'est dire que cette invention comprend tous les équivalents techniques des moyens décrits.

**Revendications**

1. Dispositif amortisseur du type agencé sur un circuit hydraulique reliant deux chambres expansibles à un réservoir de fluide hydraulique et qui permet la libre communication de ce fluide dans les deux sens entre le réservoir et les deux chambres, caractérisé par une paroi mince (22) comportant une pluralité d'orifices traversants (23) et interposée de manière étanche entre deux éléments (18, 20) à surfaces rainurées complémentaires en regard de ladite paroi, lesdits orifices traversants et lesdites surfaces rainurées définissant deux passages tortueux permettant, tout en freinant l'écoulement de fluide, la libre communication du fluide dans les deux sens entre les deux chambres et le réservoir.

2. Dispositif amortisseur selon la revendication 1, caractérisé en ce que les deux surfaces rainurées appartiennent à deux éléments cylindriques (18, 20) tronqués obliquement et définissant ainsi un plan oblique de jonction dans lequel est située la paroi mince précitée (22).

3. Dispositif amortisseur selon la revendication 1 ou 2, caractérisé en ce que les surfaces elliptiques (19, 21) des deux éléments précités (18, 20) comportent chacune un agencement de rainures (24, 25, 26, 27) débouchant dans le plan de jonction, qui est identique et se déduit par une rotation de 180° d'un élément par rapport à l'autre.

4. Dispositif amortisseur selon l'une des revendications 1 à 3, caractérisé en ce que l'étanchéité entre les surfaces rainurées et la paroi mince (22) interposée entre elles est assurée par rodage et placage.

5. Dispositif amortisseur selon l'une des revendications précédentes, caractérisé en ce que les rainures des deux éléments (18, 20) et les orifices (23) de la paroi mince (22) définissent ensemble deux circuits hydrauliques se raccordant à une même gorge annulaire (28) située sensiblement au milieu du plan de jonction oblique précité et reliée au réservoir.

6. Dispositif amortisseur selon l'une des revendications précédentes, caractérisé en ce que les deux éléments cylindriques précités comportent chacun un pion (36) et une encoche (37) complémentaires coopérant avec des encoches (38) de la paroi mince (22) pour assurer le centrage de l'ensemble.

7. Correcteur de hauteur de véhicule à suspension hydropneumatique et du type comprenant une vanne, de préférence à tiroir (9), coopérant avec la paroi mobile ou déformable de deux chambres (13, 14) reliées l'une et l'autre à un réservoir de fluide hydraulique par un circuit, caractérisé en ce que, sur ledit circuit, est monté au moins un dispositif amortisseur selon l'une des revendications 1 à 6.

## Patentansprüche

1. Dämpfungsanordnung der Gattung, die auf einem Hydraulikkreis angeordnet ist, der zwei dehnbare Kammern mit einem Hydraulikflüssigkeitsbehälter verbindet und den freien Umlauf dieser Flüssigkeit in beiden Richtungen zwischen dem Behälter und beiden Kammern ermöglicht, gekennzeichnet durch eine dünne Wand (22), die eine Mehrzahl von durchgehenden Öffnungen (23) aufweist und die zwischen zwei Elementen (18, 20) dicht liegt, deren der besagten Wand gegenüberliegende gerillte Oberflächen komplentär sind, wobei die besagten durchgehenden Öffnungen und die besagten gerillten Oberflächen zwei krumme Durchflüsse bestimmen, die den freien Umlauf der Flüssigkeit in beiden Richtungen zwischen beiden Kammern und dem Behälter ermöglichen und gleichzeitig die Strömung der Flüssigkeit bremsen.

2. Dämpfungsanordnung nach Anspruch 1, dadurch gekennzeichnet, dass beide gerillten Oberflächen zu zwei quer abgestumpften zylindrischen Elementen (18, 20) gehören, die eine quere Verbindungsebene bestimmen, worin die besagte dünne Wand (22) liegt.

3. Dämpfungsanordnung nach Anspruch 1 oder 2, dadurch gekennzeichnet, dass die elliptischen Oberflächen (19, 21) der beiden besagten Elemente (18, 20) jeweils eine Anordnung von in die Verbindungsebene einmündenden Rillen (24, 25, 26, 27) aufweisen, die identisch ist und die aus einer Drehung um 180° eines Elementes in bezug auf das andere folgt.

4. Dämpfungsanordnung nach einem der Ansprüche 1 bis 3, dadurch gekennzeichnet, dass die Dichtheit zwischen den gerillten Oberflächen und der zwischen diesen liegenden dünnen Wand (22) durch Einschleifen und Auflegen erreicht wird.

5. Dämpfungsanordnung nach einem der vorangehenden Ansprüche, dadurch gekennzeichnet, dass die Rillen der beiden Elemente (18, 20) und die Öffnungen (23) der dünnen Wand (22) zusammen zwei Hydraulikkreise bestimmen, die an einer einzigen ringförmigen Rinne (28) angeschlossen sind, die im wesentlichen in der Mitte der besagten queren Verbindungsebene liegt und die mit dem Behälter verbunden ist.

6. Dämpfungsanordnung nach einem der vorangehenden Ansprüche, dadurch gekennzeichnet, dass die beiden besagten zylindrischen Elemente jeweils einen Zapfen (36) und eine Nut (37) aufweisen, die komplementär sind und die mit Nuten (38) der dünnen Wand (22) zusammenwirken, um das Zentrieren des Ganzen zu ermöglichen.

7. Niveauregelanlage eines Fahrzeuges mit hydropneumatischer Aufhängung und der Gattung, die einen Schieber, vorzugsweise einen Absperrschieber (9) aufweist, der mit der bewegbaren oder verformbaren Wand zweier mit einem Hydraulikflüssigkeitsbehälter durch einen Kreis jeweils verbundenen Kammer (13, 14) zusammen wirkt, dadurch gekennzeichnet, dass wenigstens eine Dämpfungsanordnung nach einem der Ansprüche 1 bis 6 auf dem besagten Kreis montiert ist.

## Claims

1. Damping device of the type disposed on a hydraulic circuit connecting two expansible chambers with a hydraulic fluid tank and which permits the free communication of this fluid in both directions between the tank and the two chambers, characterized by a thin wall (22) comprising a plurality of through holes (23) and interposed in a tight manner between two elements (18, 20) with complementary grooved surfaces facing the said wall, the said through holes and the said grooved surfaces defining two tortuous passages permitting, while slowing down the flow of the fluid, the free communication of the fluid in both directions between the two chambers and the tank.

2. Damping device according to claim 1, characterized in that the two grooved surfaces belong to two obliquely truncated cylindrical elements (18, 20) thus defining an oblique junction plane in which the aforesaid thin wall (22) is located.

3. Damping device according to claim 1 or 2, characterized in that each of the elliptic surfaces (19, 21) of the two aforesaid elements (18, 20) comprises an arrangement of grooves (24, 25, 26, 27) opening into the junction plane, which is identical and results from a rotation of 180° of one element with respect to the other.

4. Damping device according to one of claims 1 to 3, characterized in that the tightness between the grooved surfaces and the thin wall (22) which is interposed between them is effected by grinding and mutual application.

5. Damping device according to one of the preceding claims, characterized in that the grooves of the two elements (18, 20) and the holes (23) of the thin wall (22) define together two hydraulic circuits connected to a same annular groove (28) located substantially in the middle of the aforesaid oblique junction plane and connected to the tank.

6. Damping device according to one of the preceding claims, characterized in that each of the two aforesaid cylindrical elements comprises a stud (36) and a notch (37) which are complementary and which co-operate with notches (38) of the thin wall (22) to effect the centering of the assembly.

7. Levelling system for a vehicle with a hydropneumatic suspension, and of the type comprising a valve, preferably a gate valve (9), co-operating with the movable or deformable wall of two chambers (13, 14) both connected to a hydraulic fluid tank by a circuit, characterized in that at least one damping device according to one of claims 1 to 6 is mounted on the said circuit.

0 207 855

**F.I.G. 1** (ETAT DE LA TECHNIQUE)

**F.I.G. 2** (ETAT DE LA TECHNIQUE)

(ETAT DE LA TECHNIQUE) **F.I.G. 3**

Fig. 7

Fig. 4

Fig. 5

Fig. 6